# EUROPEAN PATENT APPLICATION

(11) **EP 1 139 191 A1**
(43) Date of publication of application: **04.10.2001**
(21) Application number: 00302577.2
(22) Date of filing: 29.03.2000
(51) Int. Cl.: G05D 1/08, B64C 39/02

(54) **Aircraft control system**

(71) Applicant: BRITISH AEROSPACE, Farnborough, Hants. GU14 6YU (GB)
(72) Inventor: The designation of the inventor has not yet been filed
(74) Representative: Addison, Ann

(57) **Abstract**

This invention provides an aircraft control system having: means (18) for causing body excitation in at least a portion of the aircraft; means (20) for detecting an actual response to the excitation; and means (22) for comparing the actual response and a target response to the excitation and for generating a corresponding output.

The invention also provides a corresponding method for controlling an aircraft.

## Description

The present invention concerns an aircraft control system, primarily for an unmanned aircraft for enhancing or otherwise improving the airworthiness of the aircraft.

Unmanned aircraft, even when remotely piloted, may still encounter situations when they have to operate with a degree of autonomy and in the absence of communication between the aircraft and ground. Such a situation may arise, for example, in the event of the communication difficulties between the aircraft and the control station or on occasions when flight stealth is required.

Flight accuracy and safety during times when an unmanned aircraft is not in communication with a ground control station is a high requirement, but one which has not yet been satisfactorily resolved.

In a manned aircraft, the pilot receives positive indications of the aircraft's status from the sensor, safety and control systems of the aircraft and from the various systems failure warnings, and he uses these signals for responding to the current flight circumstances. In addition, the pilot also has an "intuitive sense" as to when his aircraft is behaving in an unusual or potentially dangerous manner. These additional flying skills are not available to the ground based remote operator of an unmanned aircraft, especially in circumstances when the unmanned aircraft is out of communication with the operator. This may be reflected in the responses of the unmanned aircraft to unexpected flight conditions, and hence in the accuracy and safety of the aircraft flight.

It is an aim of the present invention to improve the ability of an unmanned aircraft to detect, locate the cause of and take corrective action for unexpected or unusual circumstances arising during flight.

According to the present invention, an aircraft control system comprises:
means for causing body excitation in at least a portion of the aircraft;
means for detecting the actual aircraft response to the body excitation; and
means for comparing the actual response with a target response to the body excitation and for generating a corresponding output.

The output from the control system may be in the form of a flight condition analysis from which a control signal can be derived for effecting corrective action if necessary.

In a preferred embodiment of the invention, the means for causing body excitation in at least a portion of the aircraft are arranged to apply a low level periodic exciting force to a rigid frame portion of the aircraft. In this instance, the target response for and the actual response of the rigid framed portion may be compared in terms of frequency/transient characteristics.

In a preferred form of the invention, means are provided for calculating the target response to the body excitation, in which case the calculation means may employ a complex mathematical model for calculating the target response. For example, the aircraft may have a stored computer model of expected responses based on the Euler Dynamic Equations of Motion and established during the aircraft design process.

More particularly, the mathematical model may be based on an analysis during design of the combined control laws and aircraft dynamic characteristics, including anticipated frequency, transient and damping responses for the specific design criteria of the aircraft.

In a preferred form of the invention, the means for detecting the actual aircraft response includes means for measuring inertial aircraft body rates, accelerations, and control surface positions.

According to another aspect of the present invention, there is provided a method of aircraft control comprising:
causing body excitation in at least a portion of the aircraft;
detecting the actual aircraft response to the body excitation; and
comparing the actual response with a target response to the body excitation and generating a corresponding output.

The invention is described further, by way of example, with reference to the accompanying drawings in which:
Figure 1 is a block diagram of a conventional flight control system for use in an unmanned aircraft; and
Figure 2 is a block diagram of a modification of the flight control system of figure 1 according to the present invention.

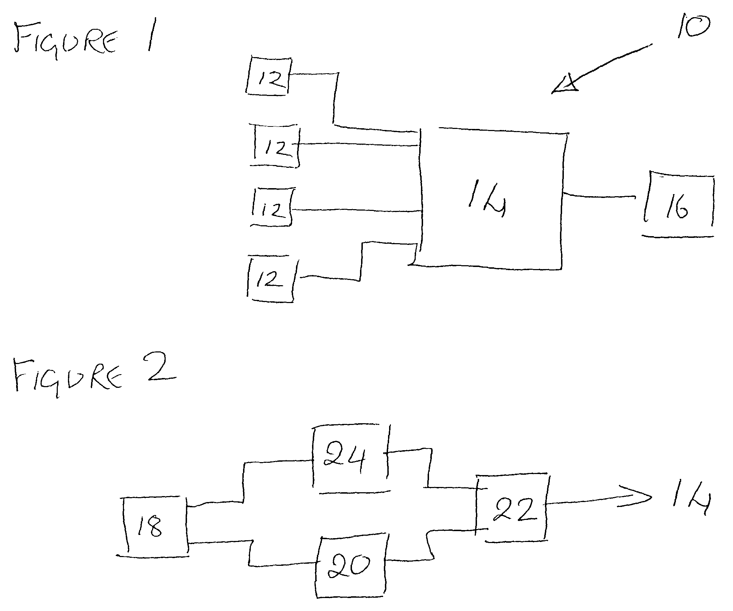

Referring initially to figure 1, an unmanned aircraft conventionally has a flight control system 10 including a plurality of sensors 12 for detecting current flight conditions, such as aircraft velocity, aircraft acceleration, control surface positions etc. The sensors provide output signals to an onboard computer 14 for monitoring the flight situation in relation to a predetermined flight plan. The flight computer 14 then provides an output to control means 16 for adjusting the aircraft flight as required.

The flight computer 14 may also be arranged to receive signals from a remote operator at a ground control station if desired.

The control system shown in figure 1 operates by way of a feed-back arrangement in which the aircraft flight is monitored by the sensors 12 and the flight computer 14 and then appropriate adjustments are made in the aircraft controls and controls surfaces to maintain the desired course and speed.

Turning now to figure 2, the present invention envisages supplementing the control system as shown in figure 1 with additional features. According to the invention, the aircraft also includes excitation means 18 for subjecting at least a portion of the aircraft frame to a low level periodic rigid body excitation. Detection means 20 are arranged to determine the actual response of the aircraft to the excitation, for example by determining frequency/transient characteristics of the aircraft body. The detection means 20 may also employ data based on measured inertial aircraft body rates, aircraft accelerations and measured control surface positions for detecting the response of the aircraft to the excitation. The determining means 20 generate a detection output for supply to comparison means 22.

In additional, calculation means 24 are connected to the excitation means 18 for calculating a target response to the excitation. The calculation means 24 employs a complex mathematical model for calculating the target response and in the present instance includes a stored computer model of expected responses based on the Euler Dynamic Equations of Motion. Such a computer model is established during the aircraft design process and is stored in the calculation means 24 at this time. The calculation means 24 are arranged to produce an output representing the target response for supply to the comparison means 22. Alternatively, if the target response does not vary with flight conditions, e.g. atmospheric pressure, then means 24 may merely be a memory storing the target response.

The comparison means 22 receives the output from the detection means 20 and the calculation/storage means 24 and performs a comparison of the actual aircraft response with the target aircraft response. The comparison means 22 generates a flight condition analysis and provides an output representing the difference between the actual aircraft response and the target response. According to the present invention, this output is supplied to the flight computer 14 for prompting corrective action if necessary. Such corrective action might include adjustments within the control system (e.g. reversion to a lower level of multiplexing, or change in control loop gains) or corrective actions to aircraft mission (e.g. land as soon as possible, fly to predefined safe place and ditch).

In this way, corrective action may be taken before the primary attitude sensors of the aircraft have even begun to provide "out-of-desired-flight-envelop" responses. Unexpected or dangerous situations can thus be corrected before they develop into unplanned flight maneuvers.

The present invention provides a radical approach to flight control in that it envisages a proactive arrangement based on excitation of the aircraft rather than a reactive system simply based on monitoring sensor data.

## Claims

1. An aircraft control system **characterised by**:
means (18) for causing body excitation in at least a portion of the aircraft;
means (20) for detecting an actual response to the excitation; and
means (22) for comparing the actual response and a target response to the excitation and for generating a corresponding output.

2. A system according further to claim 1 **characterised by** means (24) for calculating a target response to the excitation.

3. A system according to claim 2 **characterised in that** the calculating means comprised a stored mathematical model, for example a mathematical model based on the Euler Dynamic Equations of Motion, or a mathematical model based on an analysis of aircraft control laws and dynamic characteristics undertaken during design.

4. A system according to any preceding claim **characterised in that** the detecting means are arranged to detect a frequency/transient characteristic of at least a portion of the aircraft and/or the detecting means are arranged to detect at least one or more of the following: inertial aircraft body rates, aircraft accelerations, and control surface positions.

5. A system according to any preceding claim **characterised in that** the output comprises a control signal for effecting corrective action, and **in that** means responsive to the output are provided for adjusting the aircraft flight.

6. A system according to any preceding claim **characterised in that** the means for causing excitation comprise means for effecting a low level periodic excitation to a rigid portion of the aircraft frame.

7. A method of controlling an aircraft **characterised by**:
causing body excitation in at least a portion of the aircraft;
detecting the actual response of at least a portion of the aircraft to the excitation; and
comparing the actual response with a target response to the excitation and
generating a corresponding output.

8. A method according to claim 7 **characterised in that** the excitation comprises a low level periodic excitation of a rigid portion of the aircraft frame.

9. A method according to claim 7 or 8 further **characterised by** calculating a target response to the excitation.

10. A method according to claim 9 **characterised in that** the step of calculating comprises employing a stored mathematical model of anticipated responses.

11. A method according to any of claims 7 to 10 **characterised in that** the step of detecting comprises detecting frequency/transient characteristics of at least a portion of the aircraft.
